# EUROPEAN PATENT SPECIFICATION

(11) **EP 1 389 374 B1**
(45) Date of publication and mention of the grant of the patent: **26.01.2005**
(21) Application number: 02764126.5
(22) Date of filing: 23.04.2002
(51) Int. Cl.: H04J 14/02, H04B 10/00

(54) **OPTICAL CWDM-SYSTEM**
OPTISCHES CWDM-SYSTEM
SYSTEME OPTIQUE A MULTIPLEXAGE PAR REPARTITION APPROXIMATIVE EN LONGUEUR D'ONDE (CWDM)

(30) Priority: 23.04.2001 SE 0101416; 23.05.2001 US 293326 P
(43) Date of publication of application: 18.02.2004
(73) Proprietor: Transmode Systems AB, 117 43 Stockholm (SE)
(72) Inventor: BODEN, Lars, S-167 62 Bromma (SE)
(74) Representative: Holmberg, Nils Anders Patrik
(86) International application number: PCT/SE2002/000797
(87) International publication number: WO 2002/087127

(56) References cited:
- EP-A1- 1 063 803
- EP-A2- 0 697 775
- EP-A2- 1 128 585
- WO-A2-99/14879

## Description

### TECHNICAL FIELD

The present invention relates to optical communication systems and a method in such a system.

### BACKGROUND OF THE INVENTION

The invention is based on a technique called Wavelength-Division-Multiplexing (WDM). Two different types of WDM-systems exist. The first type is called Dense-Wavelength-Division-Multiplexing (DWDM). In a DWDM system the laser chip in the laser diode of the transmitter is cooled by a peltier-element to keep the laser light source stable at a certain wavelength. The different wavelengths of different light sources at the transmitters of the DWDM system are closely spaced to each, typically between 50 GHz to 200 GHZ. DWDM systems are usually used in combination with optical amplifiers.

The second WDM system existing is Coarse-Wavelength-Division-Multiplexing (CWDM). CWDM is a technique that uses uncooled laser diodes for generating the different channels. The wavelength of such diodes is allowed to drift with temperature, which is compatible with the use of cheaper broadband filters. The complexity of the mechanical construction of the laser diode is reduced in comparison to laser diodes used in DWDM-systems.

One possible structure for an optical transmission system is at least one fibre pair ring. Said ring includes a number of nodes. Some nodes connect different rings with each other. Said nodes are called master nodes. Other nodes connect different endpoints, comprising users or subscribers, to the optical transmission system. Said nodes are connected to access rings of the system.

Fibre is a rare material in the city core network and two techniques or, rather, systems for transmitting information from one node to another is used. One system is a ring structure comprising electrical Time-Division-Multiplexing (TDM) add/drop multiplexers and the other system is DWDM rings with a hubbed add/drop structure.

In a TDM add/drop multiplexer ring structure, all nodes in the access ring are sharing the capacity that is made available by the master node. The maximum capacity is defined by the line interfaces of the nodes and all nodes have to have the same line interface. All traffic that is transported on the ring is terminated in each node, thus each node communicates with its direct neighbour. The logical and physical traffic structure is a ring. Due to the ring structure it is possible to protect the system in the transport protocol by using a two fibre ring infrastructure. This type of structure is implemented in the SDH/SONET, DTM, DPT and RPR standards.

In a DWDM an add/drop multiplexer ring structure, each access node is connected via its own wavelength to the master in the ring. Thus, the traffic pattern is a star with the master as a hub. DWDM systems are used as transportation systems, but this star topology suits mostly with an Ethernet star structure. If the number of nodes is increased in the ring an amplifier has to be used to compensate the losses in the optical add/drop filters.

From European Patent Application EP 1 063 803 A1 is a CWDM optical ring network earlier known. A dual-ring, bi-directional optical fibre transmission system interconnects a series of add/drop nodes with a hub, such that multiple, widely spaced CWDM channels are established on each ring. At each node, an optical add/drop module (OADM) includes broadband filters, such as dielectric thin film filters.

Said filters are arranged to (a) extract, for the purposes of a receiver, or (b) insert, for the purposes of a transmitter, information in one or more of the channels. The signals in the one or more channels are coupled to the OADM's by a standard optical transceiver, which performs modulation and demodulation. Even though the physical topology, or structure, of the network is a ring topology, the logical topology, even called virtual topology, is a star. This means that endpoints at each of the nodes communicate with other endpoints connected to the hub. If desired, the hub in this known system can be configured to allow for selected CWDM channel optical by-pass, thereby enabling a direct connection between a pair of add/drop nodes on the ring. This connection is characterised as a point-to-point link. This means that only two points could be directly connected to each other for each wavelength used in the network system at a time. This causes a limitation in the possibility to increase the number of nodes and the capacity of this known network.

### BRIEF DESCRIPTION OF THE INVENTION

A general problem of broadband access systems is to increase the number of access nodes. The nodes of the TDM ring share the available bandwidth. If a minimum bandwidth per node has to be guaranteed, the maximum number of nodes per ring is limited. Point-to-point WDM systems are expensive and hubbed WDM system are not optimised for TDM protocols. They are instead optimized to packet switched networks. In other words, a problem faced by many operators today is to upgrade or migrate their existing infrastructure to modern networks.

The basic idea is to increase the transmission capacity per fibre by combining light channels of different wavelengths on one fibre. A coarse WDM optical add/drop network structure optimised for logical TDM ring topologys is suggested.

In more detail, the present invention relates to a system for optical transmission of information over a multiplexed logical ring structure comprising a number of nodes, as stated in the independent claim 1. Said ring structure is a combination of a number of logical optical rings, each at a specific wavelength, on the same physical fibre ring. Possible embodiments are disclosed in the dependent claims. For an example, one node or a number of nodes may be master nodes.

One advantage of the present invention is that it provides a protocol transparent solution and therefore is easy to apply to an existing system. Wavelength channels, like virtual fibre pairs, can be added one after the other without interrupting the existing traffic.

Further one advantage of the present invention is that different wavelength channels do not interfere with adjacent channels and, thus, do not exchange information.

Furthermore, one advantage is that the proposed system offers a major cost reduction compared to DWDM systems.

Yet another advantage is that the wavelengths are no longer dedicated to specific access node. The same wavelength is added and dropped several times throughout the network generating logical wavelength rings.

Another advantage is that logical rings need fewer wavelengths to connect a higher number of access nodes. For instance, only two wavelengths are necessary to connect five access co-locations.

Another advantage is that a number of expensive router interfaces at the Master node is reduced and by this the total cost of the solution.

Finally, by deploying logical wavelength rings the multicast functionality is fully exploited.

### BRIEF DESCRIPTION OF THE DRAWINGS

Figure 1 is a schematic illustration of a system for optical transmission of information.
Figure 2 shows a spectrum diagram for a CWDM-system.
Figure 3 is a schematic illustration of a multiplexed ring structure according to the present invention.
Figure 4 is an illustration of a logical ring structure according to the present invention.
Figure 5 is a block diagram illustrating an optical add/drop multiplexer (OADM) in a node of the present invention.
Figure 6 illustrates the data flow in the electrical domain of a CWDM-ring element with Network Management Channel.
Figure 7 is an illustration of a logical ring structure of a Hybrid CWDM-DWDM system, which is further one embodiment of the present invention.
Figure 8 is a spectrum diagram of a transmission system based on the Hybrid CWDM-DWDM system technology according to another embodiment of the present invention.
Figure 9 shows a broadcast drop node design according to an embodiment of the present invention.

### DETAILED DESCRIPTION OF THE INVENTION

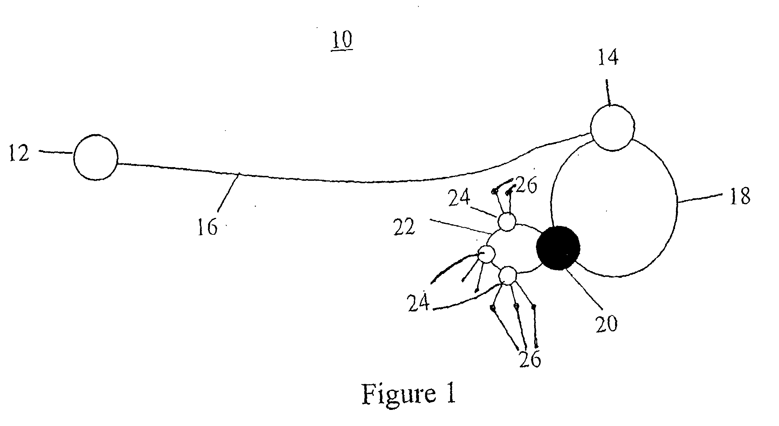

Figure 1 is a schematic illustration of a system for optical transmission of information, wherein said system comprises an optical fibre network 10. Said network 10 is arranged between two geographic sites 12, 14, e.g. Gothenburg and Stockholm. This long distance part of the system is called a core network 16, sometimes even called a backbone. The core network 16 includes a trunk of optical fibres for the transmission of information. From the core network 16 is the information conducted into a metropolitan access network (MAN) ring 18. At least one master node 20 is connected to said MAN. The master node is a common node for the MAN and an access ring 22. The access ring comprises an optical fibre pair (not shown). Connected to said fibre pair is a series of OADM nodes 24. Subscriber/client devices for receiving and/or transmitting information are connected to each OADM-node via subscriber/ client connections 26.

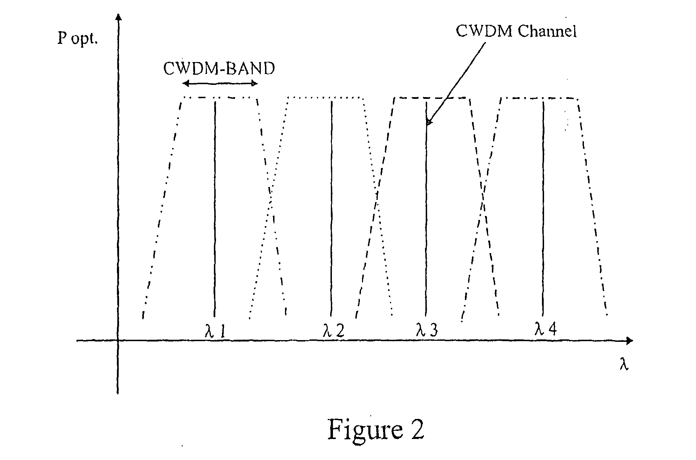

Figure 2 shows a diagram wherein the abscissa is the optical wavelength, λ, and the ordinate is the optical effect, Pₒₚₜ. In a transmission system based on the CWDM (coarse -wavelength-division-multiplexing) technology a number of optical transmission bands are spread in a band of the optical spectrum. Figure 2 shows four optical transmission bands, each one including one channel, λₙ (n = 1, 2, 3, 4, ...). Different wavelength channels are separated for not interfering with each other. A typical channel spacing is 20 nm (corresponding to 2400 GHz in the frequency band). CWDM is a technique that uses uncooled laser diodes for generating the different channels. The channel wavelength can change with the temperature of the laser diode, but as the original wavelength is centred in the band and the spacing is enough, the drifting of the laser diode will not cause any problem. This will reduce the price of the system, but also reduce the number of possible channels per wavelength interval.

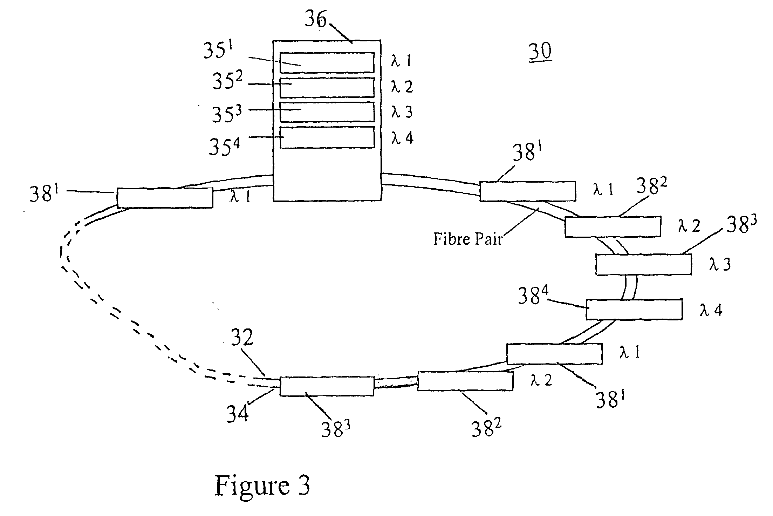

Figure 3 is a schematic illustration of a multiplexed ring structure embodiment of the invention. A physical access ring 30 comprises two optical fibres 32, 34 constituting a fibre pair. A number of nodes 38, of which one is a master node 36, are connected to said ring and fibre pair. The master node 36 connects the access ring to a metropolitan area network, MAN. However, it is not necessary that the ring has to comprise a master node. As shown in figure 1, all nodes are physically connected to the fibre pair, but logically the nodes 38 are connected to different logical wavelength rings/channels λₙ (n = 1, 2, 3, 4, ...). This means that physically adjacent OADM-nodes, in other words neighbour nodes 38, do not need to be logical neighbours 38¹; 38²;38³;38⁴. Nodes 38ⁿ is logical nodes and belongs to the same logical ring λₙ. A master node 36 is characterised as a common point for all logical rings and it therefore allows transfer of information from one logical ring to another. The master node comprises a number of master node elements 35ⁿ (n = 1, 2, 3, 4, ...), each one corresponding to a logical ring.

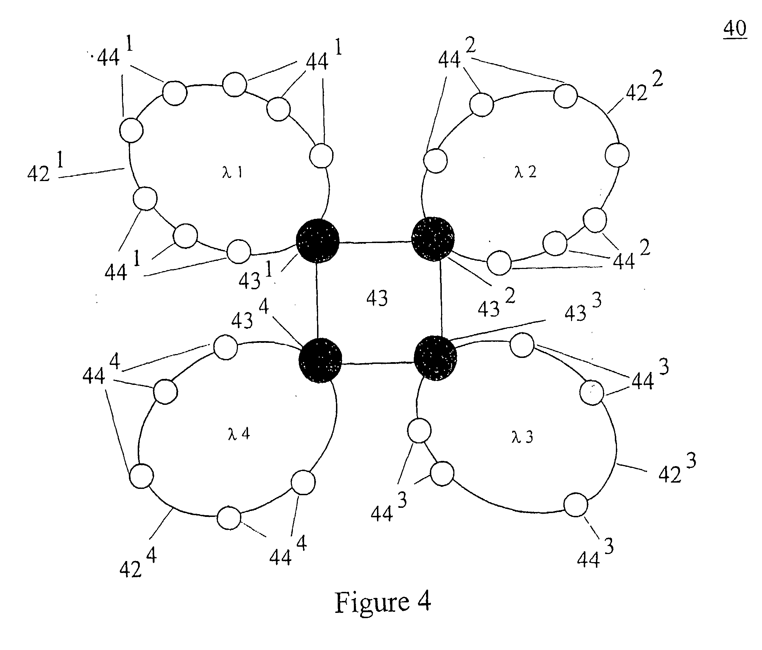

Figure 4 is an illustration of a logical ring structure 40 according to the present invention. The invention provides a multiplexed ring structure 40 combining a number of logical optical rings 42ⁿ (n = 1, 2, 3, 4, ...) on the same physical fibre ring comprising a fibre pair (32, 34 in fig. 3). Each logical ring 42ⁿ operates on a different wavelength band λₙ. The spacing between each band is such as there is no cross talk between the logical rings 42ⁿ. Each ring is constituted by a series of OADM nodes 44, logical neighbours, such as one wavelength is dropped and/or added, while the other wavelengths go through with minimum cross talk. Each node 44 retrieves all traffic at the wavelength λₙ defining the logical ring 42ⁿ it belongs to. Depending on the situation, the traffic then can be either terminated or fully regenerated and/or processed and then sent back into the logical ring. A Master node 43 intersects all logical rings and allows to transfer traffic from one ring to the other, by converting the wavelength. It acts as well as a gateway between the multiplexed logical rings and a larger core system, for instance a Wide Area Network (WAN) or a Metropolitan Area Network (MAN). One Master node is created by cascading a number of nodes 43ⁿ (n = 1, 2, 3, 4, ...), each belonging to one of the rings intersecting the Master node. Each Master node element feeds one wavelength in the next Master node element, which add a new wavelength, until all the desired wavelengths are multiplexed.

The difference between this and other network structure is following. Compared to only TDM rings the maximum number of access nodes is now increased by a multiple with the number of wavelength used in the network. Each wavelength access node is communicating with the neighbour with the same wavelength, not with the physical/geographical neighbour. Compared to WDM hubbed rings the logical traffic pattern flow is still existing. Ring protocol like SDH/ SONET, DTM, DPT and RPR are based on the assumption that the logical ring infrastructure is available. Even Gigabit Ethernet networks can be configured as rings with the help of modem switches and routers. "Hubbed" wavelength systems do not comply with this assumption as they represent a logical star topology.

The concept of logical rings gives the freedom to deploy new technologies alongside the existing ones, with minimal changes to the existing ones, with minimal changes to the infrastructure, examples:
- Add a DTM ring (DTM is a trademark of Cisco System INC) to an existing SDH/SONET metro network.
- Add a second DPT ring (DPT is a trademark of Dynarc INC) to an existing DPT ring.
- Divide a Gigabite Ethernet ring into multiple rings.
- Feed distributed HFC coax islands.

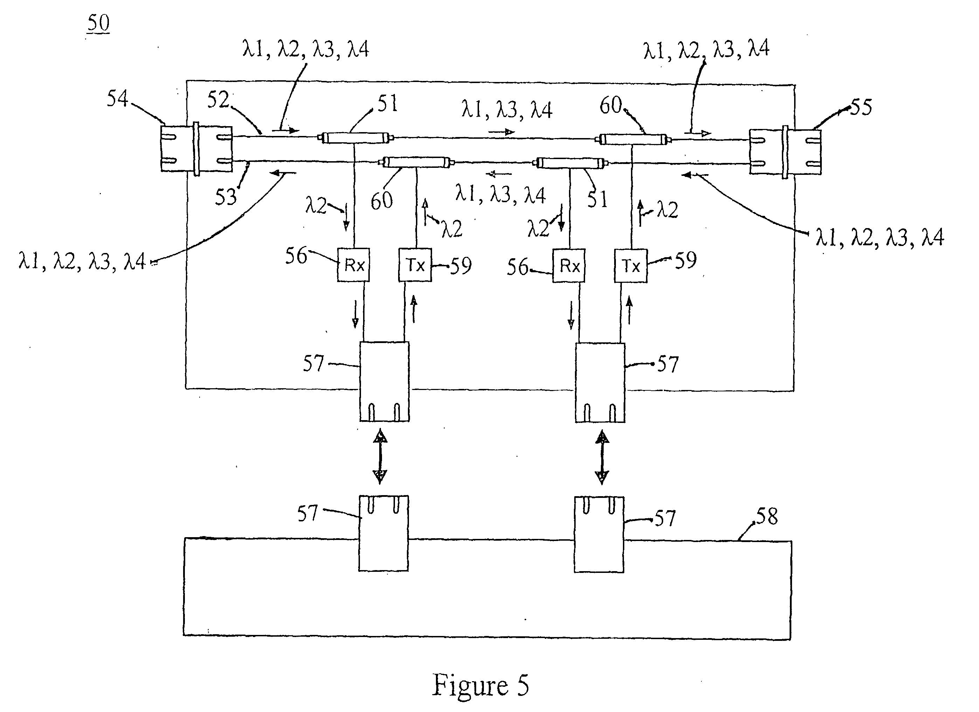

Figure 5 is a block diagram illustrating an optical add/drop multiplexer (OADM) 50 in a node of the present invention. The multiplexer is connected to the fibre pair, 52 and 53, of the access ring via the contact interfaces, east 54 and west 55. Information is transported in both directions on the pair. The function of the OADM is following. The present node drops λ₂-channel information by use of a drop filter 51. Said information is received by use of a CWDM receiver 56 that forwards the information to a low cost transceiver 57. The transceiver is an optical connection or an electric interface to a processing unit 58 that comprises an information processor. The processed information is returned via the low cost transceiver to a CWDM transmitter 59 that transmits the processed information on to the λ₂ channel. The transmitter is connected to an add-filter 60 that adds the information onto the same fibre.

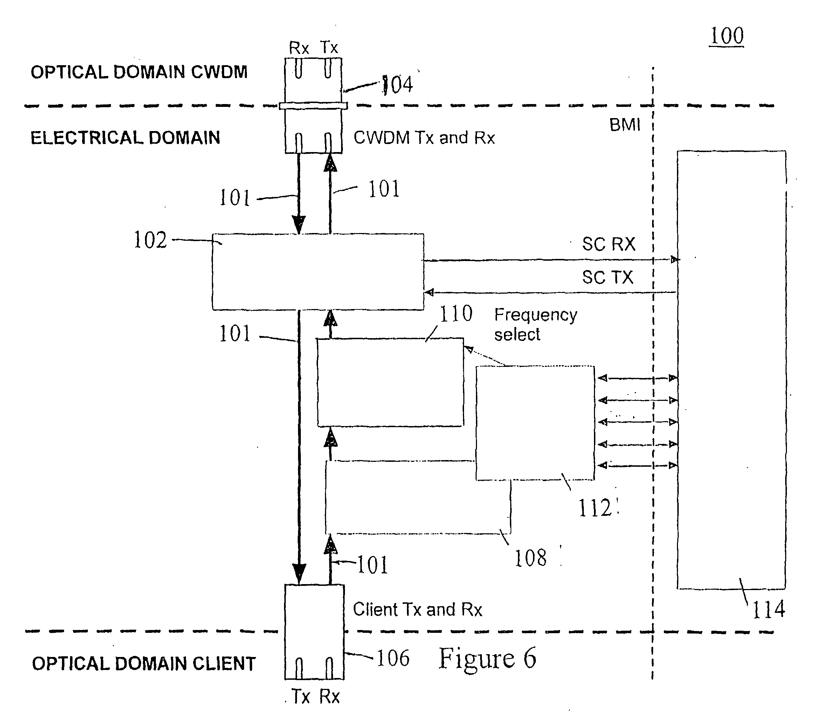

Figure 6 illustrates the data flow in the electrical domain of a CWDM-ring element 100 with Network Management Channel, which is an embodiment of the present invention. A Network Management Channel can be modulated as an overtone in the electrical frequency domain on the transmission signal channel 101. By doing this, information from one node can be distributed in the system. Said CWDM-ring element 100 comprises a device for adding/removing the pilot tone/overtone 102. Distributed information can be for example link losses between nodes or information collected at each node from other equipment.

Available information may be:
- CWDM transmitter Tx transmit power
- CWDM receiver Rx receive power
- Bit rate
- CLIENT transmitter Tx transmit power
- CLIENT receiver Rx receive power.

Further, the CWDM-ring element 100 comprises an interface 104 connecting the element to the optical domain of the CWDM network and an interface 106 connecting the element to the client, a device for bit rate detection 108, a device for "any rate" clock recovery 110 and Micro controller (PIC) 112. Said devices and the controller are connected to and capable of communicate information and signals with a NMB building block 114 comprising a TCP interface. Said blocks supports different protocols, such as Ethernet,V24, V28 and RS232.

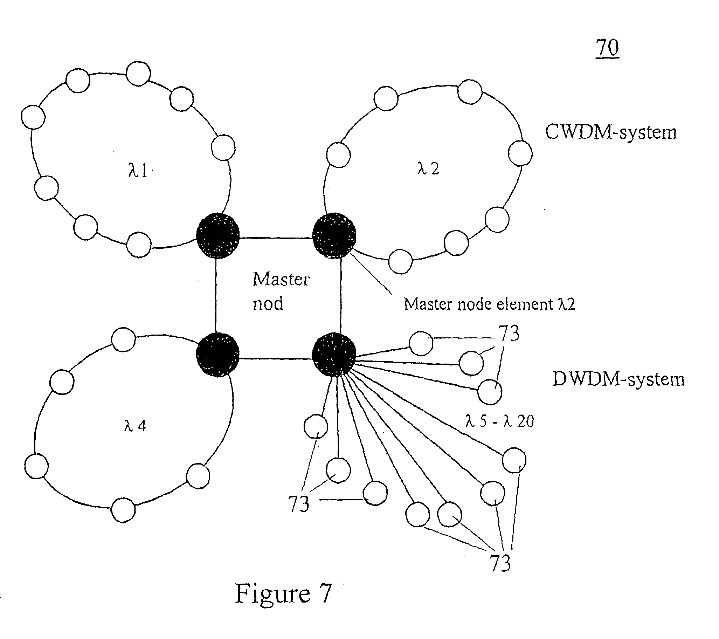

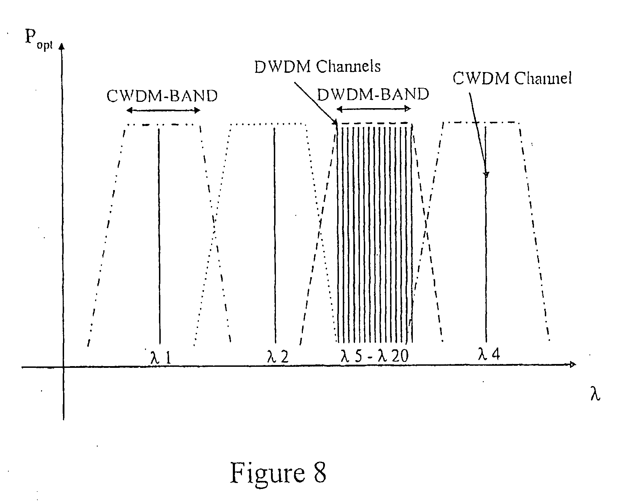

Figure 7 is an illustration of a logical ring structure of a Hybrid CWDM-DWDM system 70, which is further one embodiment of the present invention. This structure is similar to the logical ring structure in figure 4, and therefore are corresponding reference numbers for equivalent details used. Due the fact that CWDM channels use a wavelength band with a bandwidth of around 13 nm, it is possible to build a hybrid system. One of the channel bands is used for a multi-channel DWDM system, in this case 16 (λ₅-λ₂₀). The add/drop configuration of the DWDM system then would be a hubbed configuration, also called star topology/structure, and thus some nodes 73 with an extraordinary need of broadband access could be supplied by this system. The DWDM system has no logical ring structure and acts as point-to-point structure from the master to each node 73. This will constitute a hybrid system that can have a spectrum diagram illustrated in figure 8.

Figure 8 is a similar spectrum diagram as earlier illustrated in figure 1, wherein the abscissa is the optical wavelength, λ, and the ordinate is the optical effect, Pₒₚₜ. The transmission system based on the Hybrid CWDM-DWDM system technology has a number of optical transmission bands that are spread in a band of the optical spectrum. The third CWDM-channel λ₃ replaced by a number of DWDM-channels λ₅- λ₂₀.

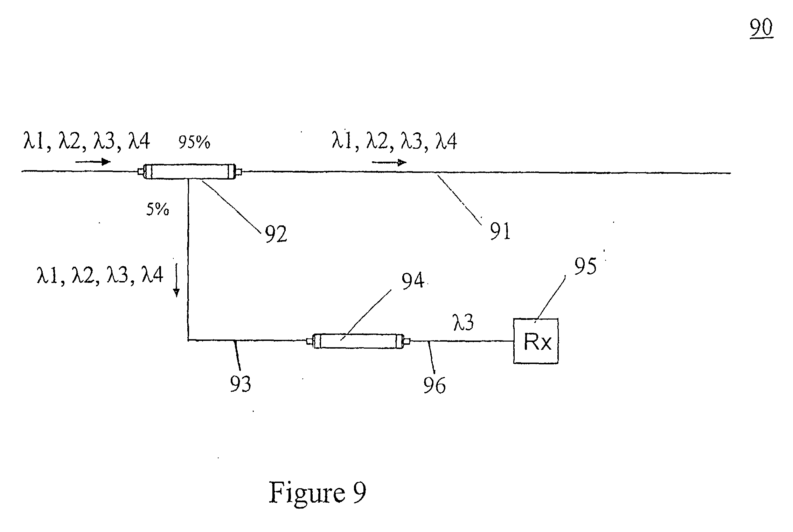

Figure 9 shows a broadcast drop node design 90. Such a design could be implemented in the CWDM ring. For example, it is of interest to broadcast cable-TV via optical signals on channels λ₁-λ₄. In this case, 5% of the optical effect of all the signals on the different channels λ₁-λ₄ is divided by use of an optical coupler 92 connected to a network fibre 91. The rest of the 95% of the optical effect of the signals continues through the network fibre 91. A filter 94 is connected to the optical coupler 92 by use of a fibre 93 and the dropped signals is conducted to said filter. The filter extracts a predetermined CATV-signal (in this case λ₃) and stops the remaining signals (λ₁-λ₂ and λ₄) to pass through the filter. The predetermined CATV-signal is conducted via a fibre 96 to a connected receiver Rₓ 95, in which the optical signal can be converted to the electric domain. In the next broadcast nodes a similar procedure is performed. The only difference is how much of the optical effect is divided and which channel signal that is allowed to pass said filter.

The advantage by using this type of system is that traffic (e.g. cable-TV) is on one wavelength and bi-directional traffic (e.g. voice, data, ... )is on another wavelength. Different end-equipment could be used together with different wavelength.

The present invention is not limited to the above-described preferred embodiments. Various alternatives, modifications and equivalents may be used. Therefore, the above embodiments should not be taken as limiting the scope of the invention, which is defined by the appended claims.

## Claims

1. A system (30, 40, 70) for optical transmission of information over a multiplexed logical ring structure, comprising a number of nodes (38, 44), said ring structure being a combination of a number of logical optical rings, each at a specific wavelength, on the same physical fibre ring (32, 34, 42) wherein each logical ring is adapted to link a number of OADM nodes (38, 44), **characterised in that**, each logical ring is constituted by a series of OADM nodes (38, 44) such as the wavelength defining said ring is added or dropped, while the other wavelengths go through with minimum cross talk.

2. A system according to claim 1, **characterised in that**, said physical fibre ring is composed by two fibres to a fibre pair (32, 34).

3. A system according to claim 1 or 2, **characterised in that**, each logical ring is adapted to operate on a different wavelength band (CWDM-Band) each logical ring comprises and supports at least two nodes, each node is adapted to exchange information with its direct neighbours on the said logical ring.

4. A system according to claim 3, **characterised in that**, the spacing between each adjacent pair of bands is such that there is no cross talk between the logical rings.

5. A system according to claim 3 or 4, **characterised in that**, each node is adapted to retrieve all traffic at the wavelength band defining the logical ring it belongs to.

6. A system according to any of the preceding claims, **characterised in that**, at least one of the nodes is a master node (36, 43) that is a common point for all logical rings and each said master node intersects all logical rings and allows to transfer traffic from one logical ring to the other by converting the wavelength.

7. A system according to any of the preceding claims, **characterised in that**, said system comprises at least one CWDM-ring including at least one Network Management Channel, wherein the Network Management Channel is multiplexed electrically in the frequency domain before being transmitted optically on the fibres.

8. A system according to any of the preceding claims, **characterised in that**, said system is a CWDM-system wherein at least one of the channel bands is used for a multi-channel DWDM system (DWDM-System).

9. A system according to any of the preceding claims, **characterised in that**, said system comprises at least one CWDM-ring having at least one broadcast drop node.

10. Method for optical transmission of information over a multiplexed logical ring structure (30, 40, 70) comprising a number of nodes (38, 44) the method comprising the step of combining a number of logical optical rings each at a specific wavelength, on the same physical fibre ring (32, 34, 42), wherein each logical ring links a number of OADM nodes, **characterised in that** each logical ring is constituted by a series of OADM nodes (38, 44) such as the wavelength defining said ring is added or dropped, while the other wavelengths go through with minimum cross talk.

## Patentansprüche

1. System (30, 40, 70) zur optischen Übertragung von Informationen über eine gemultiplexte logische Ringstruktur mit einer Anzahl Knoten (38, 44), wobei die Ringstruktur eine Kombination aus einer Anzahl logischer optischer Ringe mit jeweils einer spezifischen Wellenlänge in demselben physischen Faserring (32, 34, 42) ist, wobei jeder logische Ring dafür konfiguriert ist, eine Anzahl OADM-Knoten (38, 44) zu verbinden, **dadurch gekennzeichnet, dass** jeder logische Ring aus einer Reihe OADM-Knoten (38, 44) gebildet wird, dergestalt, dass die Wellenlänge, welche den Ring definiert, hinzugefügt oder abgeworfen wird, während die anderen Wellenlängen mit minimalem Übersprechen passieren.

2. System nach Anspruch 1, **dadurch gekennzeichnet, dass** der physische Faserring aus zwei Fasern besteht, die zu einem Faserpaar (32, 34) zusammengesetzt sind.

3. System nach Anspruch 1 oder 2, **dadurch gekennzeichnet, dass** jeder logische Ring so konfiguriert ist, dass er auf einem anderen Wellenlängenband (CWDM-Band) arbeitet, wobei jeder logische Ring wenigstens zwei Knoten umfasst und unterstützt, wobei jeder Knoten so konfiguriert ist, dass er Informationen mit seinen unmittelbaren Nachbarn in dem logischen Ring austauscht.

4. System nach Anspruch 3, **dadurch gekennzeichnet, dass** der Abstand zwischen jedem benachbarten Band-Paar so breit ist, dass es kein Übersprechen zwischen den logischen Ringen gibt.

5. System nach Anspruch 3 oder 4, **dadurch gekennzeichnet, dass** jeder Knoten so konfiguriert ist, dass er den gesamten Datenverkehr auf dem Wellenlängenband übernimmt, das den logischen Ring definiert, zu dem es gehört.

6. System nach den vorangehenden Ansprüchen, **dadurch gekennzeichnet, dass** wenigstens einer der Knoten ein Masterknoten (36, 43) ist, der ein zentraler Anlaufpunkt für alle logischen Ringe ist, wobei jeder Masterknoten alle logischen Ringe schneidet und den Transfer von Datenverkehr von einem logischen Ring zum anderen durch Umwandlung der Wellenlänge ermöglicht.

7. System nach den vorangehenden Ansprüchen, **dadurch gekennzeichnet, dass** das System wenigstens einen CWDM-Ring aufweist, der wenigstens einen Netzwerkmanagementkanal enthält, wobei der Netzwerkmanagementkanal in der Frequenzdomäne elektrisch gemultiplext wird, bevor er optisch über die Fasern übertragen wird.

8. System nach den vorangehenden Ansprüchen, **dadurch gekennzeichnet, dass** das System ein CWDM-System ist, wobei wenigstens eines des Kanalbänder für ein mehrkanaliges DWDM-System (DWDM-System) verwendet wird.

9. System nach den vorangehenden Ansprüchen, **dadurch gekennzeichnet, dass** das System wenigstens einen CWDM-Ring umfasst, der wenigstens einen Rundsende-Abwurfknoten aufweist.

10. Verfahren zur optischen Übertragung von Informationen über eine gemultiplexte logische Ringstruktur (30, 40, 70) mit einer Anzahl Knoten (38, 44), wobei das Verfahren den Schritt des Kombinierens einer Anzahl logischer optischer Ringe mit jeweils einer spezifischen Wellenlänge in demselben physischen Faserring (32, 34, 42) umfasst, wobei jeder logische Ring eine Anzahl OADM-Knoten verbindet, **dadurch gekennzeichnet, dass** jeder logische Ring aus einer Reihe OADM-Knoten (38, 44) gebildet wird, dergestalt, dass die Wellenlänge, welche den Ring definiert, hinzugefügt oder abgeworfen wird, während die anderen Wellenlängen mit minimalem Übersprechen passieren.

## Revendications

1. Système (30, 40, 70) pour la transmission optique d'information sur une structure d'anneaux logiques multiplexée, comprenant un certain nombre de noeuds (38, 44), cette structure d'anneaux étant une combinaison d'un certain nombre d'anneaux optiques logiques, chacun à une longueur d'onde spécifique, sur le même anneau de fibre physique (32, 34, 42), dans lequel chaque anneau logique est adapté pour relier un certain nombre de noeuds de modules d'insertion / extraction optiques (OADM) (38, 44), **caractérisé en ce que** chaque anneau logique est constitué d'une série de noeuds d'OADM (38, 44), de façon que la longueur d'onde définissant ledit anneau soit insérée ou extraite, tandis que les autres longueurs d'onde passent à travers avec une diaphonie minimale.

2. Système selon la revendication 1, **caractérisé en ce que** l'anneau de fibre physique est composé de deux fibres formant une paire de fibres (32, 34).

3. Système selon la revendication 1 ou 2, **caractérisé en ce que** chaque anneau logique est adapté pour fonctionner sur une bande de longueur d'onde différente (CWDM-Band), chaque anneau logique comprend et supporte au moins deux noeuds, chaque noeud est adapté pour échanger de l'information avec ses voisins directs sur ledit anneau logique.

4. Système selon la revendication 3, **caractérisé en ce que** l'écartement entre chaque paire adjacente de bandes est tel qu'il n'y ait pas de diaphonie entre les anneaux logiques.

5. Système selon la revendication 3 ou 4, **caractérisé en ce que** chaque noeud est adapté pour obtenir tout le trafic dans la bande de longueur d'onde définissant l'anneau logique auquel il appartient.

6. Système selon l'une quelconque des revendications précédentes, **caractérisé en ce que** l'un au moins des noeuds est un noeud maître (36, 43) qui est un point commun pour tous les anneaux logiques, et chaque noeud maître rencontre tous les anneaux logiques et permet de transférer du trafic d'un anneau logique vers l'autre en convertissant la longueur d'onde.

7. Système selon l'une quelconque des revendications précédentes, **caractérisé en ce que** ce système comprend au moins un anneau à multiplexage en longueur d'onde grossier (CWDM) incluant au moins un Canal de Gestion de Réseau, dans lequel le Canal de Gestion de Réseau est multiplexé électriquement dans le domaine des fréquences avant d'être transmis optiquement sur les fibres.

8. Système selon l'une quelconque des revendications précédentes, **caractérisé en ce que** ce système est un système de multiplexage en longueur d'onde grossier (CWDM) dans lequel l'une au moins des bandes de canaux est utilisée pour un système de multiplexage en longueur d'onde dense (DWDM) multicanal (DWDM-System).

9. Système selon l'une quelconque des revendications précédentes, **caractérisé en ce que** ce système comprend au moins un anneau CWDM ayant au moins un noeud d'extraction de diffusion.

10. Procédé pour la transmission optique d'information sur une structure d'anneaux logiques multiplexée (30, 40, 70) comprenant un certain nombre de noeuds (38, 44), le procédé comprenant l'étape consistant à combiner un certain nombre d'anneaux optiques logiques, chacun à une longueur d'onde spécifique, sur le même anneau de fibre physique (32, 34, 42), dans lequel chaque anneau logique relie un certain nombre de noeuds de modules d'insertion / extraction optiques (OADM), **caractérisé en ce que** chaque anneau logique est constitué d'une série de noeuds d'OADM (38, 44), de façon que la longueur d'onde définissant ledit anneau soit insérée ou extraite, tandis que les autres longueurs d'onde passent à travers avec une diaphonie minimale.
